# EUROPEAN PATENT APPLICATION

(11) **EP 1 465 128 A1**
(43) Date of publication of application: **06.10.2004**
(21) Application number: 04101299.8
(22) Date of filing: 30.03.2004
(51) Int. Cl.: G07F 19/00

(54) **Transaction apparatus for processing transactions by means of a communication network, and system comprising such a transaction apparatus**

(30) Priority: 01.04.2003 NL 1023068
(71) Applicant: Coöperatieve Centrale Raiffeisen-Boerenleenbank B.A., 3521 CB Utrecht (NL)
(72) Inventor: Heijjer, Robert, Charles, 2321 PN, Leiden (NL); Van Ipenburg, Werner, 3941 VL, Doorn (NL); Westerhof, Willem, Cornelis, 3768 GW, Soest (NL)
(74) Representative: de Vries, Johannes Hendrik Fokke

(57) **Abstract**

A transaction apparatus for processing transactions by means of a communication network comprises at least one front-end computer and at least one transaction processing unit separate therefrom, which comprises sellers and buyers data files. Payment requests including a buyer and a seller identification are received via the communication network and a payment ticket is delivered via the communication network upon approval of a payment request and an error message is delivered via the communication network upon disapproval of a payment request. Upon receipt of a payment request, the front-end computer retrieves information required for the processing of the transaction from the data file of the transaction processing unit and verifies the payment request on the basis of the received buyer data. The transaction processing unit comprises at least one separate buyer transaction computer and at least one separate seller transaction computer, the buyer transaction computer comprising a buyers data file and the seller transaction computer comprising a sellers data file. The buyer transaction computer communicates with the front-end computer for providing buyer data and a payment ticket, wherein the payment request, upon approval by the front-end computer, is passed on to the buyer transaction computer, which carries out the verification of the payment request again on the basis of the buyer data in the buyers data file and, upon approval of the payment request, passes the payment request on to the seller transaction computer for verification. The seller transaction computer verifies the payment request on the basis of seller data in the sellers data file, delivering the payment ticket upon approval of the payment request and an error message upon disapproval of the payment request.

## Description

The invention relates to a transaction apparatus for processing transactions by means of a communication network according to the preamble of claim 1, as well as to a system for handling transactions via a communication network, which comprises such a transaction apparatus.

Such systems are known in various embodiments. US-A-6,092,053, for example, describes a system for handling electronic transactions via a network, wherein the transaction apparatus comprises consumer and merchant data files and in which the transaction apparatus receives payment requests in the form of offers from a merchant. The transaction apparatus is in fact only arranged for supporting the process of collecting purchase information, including the manner of payment. In this known system, the payment ticket is a confirmation message containing payment information, such as a credit card number. Said known system is not suitable for use with so-called micro payments, i.e. payments in the order of a few Euro cents to a few Euros.

A transaction apparatus and a system comprising such a transaction apparatus of the above kind are known from CA-A-2 217 739. Although the separation between the front-end computer and the transaction processing unit in said known apparatus provides security against improper use by unauthorised persons, there is a great need for a reliable transaction apparatus that provides improved security, by means of which micro payments can be effected at relatively low cost in relation to said micro payments. A system comprising such a transaction apparatus makes it possible to supply electronic products, such as music files, data files and software files to consumers over the Internet on direct payment. It stands to reason that the system may also be used for purchasing other products or services by means of an electronic transaction.

The object of the invention is to provide a transaction apparatus and a system of the above kind that supply this need.

In order to accomplish that objective, the transaction processing unit of the transaction apparatus according to the invention comprises at least one separate buyer transaction computer and at least one separate seller transaction computer, the buyer transaction computer comprising a buyers data file and the seller transaction computer comprising a sellers data file, wherein the buyer transaction computer communicates with the front-end computer for providing buyer data and a payment ticket, wherein the payment request, upon approval by the front-end computer, is passed on to the buyer transaction computer, which carries out the verification of the payment request again on the basis of the buyer data in the buyers data file and, upon approval of the payment request, passes the payment request on to the seller transaction computer for verification, wherein the seller transaction computer verifies the payment request on the basis of seller data in the sellers data file, delivering the payment ticket upon approval of the payment request and an error message upon disapproval of the payment request. In this way a transaction apparatus is obtained which is in particular suitable for processing micro payments, with the separation into a separate front-end computer and a separate transaction processing unit comprising separate buyer and seller transaction computers makes it possible to provide adequate security against hackers. In addition, only the seller data needed for processing a transaction is loaded from the data file of the transaction processing unit into the front-end computer, which carries out a first verification of the payment request on the basis of said information. Upon approval by the front-end computer, a second verification is carried out by the transaction processing unit on the basis of the buyer data contained in the data file, and further processing of the transaction for the purpose of the delivering a payment ticket will only take place if the payment request is approved after both verifications. This means that even if a hacker were to succeed in manipulating the verification of the transaction in the front-end computer so as to obtain approval, the transaction will be disapproved yet in the transaction processing unit.

Since the front-end computer does not transfer any and all invalid transactions to the transaction processing unit, the transaction processing unit, which must consult data files for the second verification, only needs to process transactions that are more likely to be approved.

According to the invention, it is preferred to keep separate buyer and seller log files in the transaction processing unit, in which log files the transaction data is recorded, the transaction apparatus being provided with a back-end computer separate from the front-end computer and the transaction processing unit, which back-end computer periodically receives the log files from the transaction processing unit and which is arranged for verifying the seller and buyer log files, wherein the back-end computer only releases transactions it has approved for being processed into payment transactions.

In this way the security of the system is enhanced even further. Unauthorised persons can no longer gain access to the log files of the transaction processing unit that have been transferred to the back-end computer. The keeping of separate buyer and seller log files makes it possible to carry out a verification by comparing the said files with each other, so that manipulation of the system would require manipulation of both the buyer log files and the seller log files, such that the required correspondence is maintained. Such a manipulation by unauthorised persons is virtually impossible.

According to an advantageous embodiment, manipulation of the buyer and seller log files is rendered impossible in that a buyer log file is kept in the buyer transaction computer and a seller log file is kept in the seller transaction computer, in each one of which log files transaction events that occur during the processing of a transaction are recorded, wherein the back-end computer verifies all the transaction events in both log files and only releases a transaction for being processed into a payment transaction upon approval of all the associated transaction events.

The invention will now be explained in more detail with reference to the drawing, which is a very schematic representation of an embodiment of the system according to the invention.

Fig. 1 shows an embodiment of the system according to the invention.

Fig. 2 is a more detailed view of a preferred embodiment of the transaction apparatus of the system of Fig. 1.

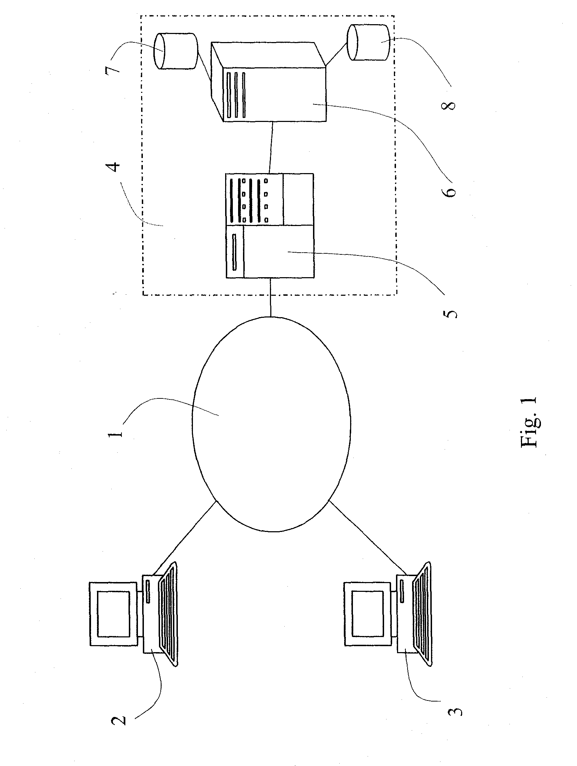

Fig. 1 shows a system for handling electronic transactions via a network 1, the Internet in the present embodiment. The system comprises a number of seller computers 2 and a large number of buyer computers 3, which are connected to the network. For the sake of clarity, only one seller computer 2 and one buyer computer 3 is shown in Fig. 1. The illustrated system furthermore comprises a transaction apparatus 4, which is likewise connected to the network 1. The seller computer 2 runs web server software, by means of which a number of web pages are made accessible, with one or more web pages comprising one or more product offers, in particular in the form of files to be downloaded over the Internet 1, such as music files, data files and software files. The system as described herein may also be used for effecting a payment for a product that is supplied to a buyer via a non-electronic delivery, however. The buyer computer 3 runs a web browser which is known per se, via which the network 1 is accessible, via which network communication with a seller computer 2 and the transaction apparatus 4 is possible. A user of a buyer computer 3 can visit the website of a seller computer 2 in a usual manner and open a web page. Said web page enables the user of the buyer computer to indicate, by clicking a button, that he wishes to purchase a product. In that case the buyer computer 3 will forward the payment request received from the seller computer 2, which comprises the address of the transaction apparatus 4 and which is included in the web page in the form of a link, to the transaction apparatus 4 over the network 1 for further processing.

In the illustrated embodiment of the system, the transaction apparatus 4 comprises a front-end computer 5 and a transaction processing unit 6 separate therefrom, which comprises a sellers data file 7 and a buyers data file 8. The processing of the payment request and the registration of the associated transaction between the buyer and the seller, i.e. the payment by the buyer to the seller, in general takes place as follows.

The buyer computer 3 forwards the payment request received from the seller computer 2 to the front-end computer 5. After receipt of the payment request by the front-end computer 5, the front-end computer 5 starts a session for processing a transaction within the transaction apparatus 4. The front-end computer 5 asks the buyer computer 3 for a user identification, for example in the form of a user name and a password. The front-end computer 5 passes the user name and the password on to the transaction processing unit 6 which, in response thereto, delivers data from the buyers data file 8 required for processing the transaction to the front-end computer 5. Said buyer data for example comprises the balance that is available for payments within the system, a spending limit and the like. The front-end computer 5 carries out a first verification of the payment request on the basis of the buyer data received. If the payment request is approved after said verification, the payment request will be passed on to the transaction processing unit 6 for further verification. The transaction processing unit 6 will verify the payment request again on the basis of the buyer data in the buyers data file 8. If said verification results in approval thereof, the payment request will be verified on the basis of the seller data in the data file 7. If said verification does not reveal any errors, the transaction processing unit 6 will deliver a payment ticket to the front-end computer 5. The front-end computer 5 sends the payment ticket to the seller computer 2 via the buyer computer 3, after which the seller computer 2 delivers the requested product to the buyer computer 3. If the payment request is disapproved by the front-end computer 5 or, in the second instance, by the transaction processing unit 6, the front-end computer 5 will send an error message to the buyer computer 3. The activities of the transaction processing unit 6 are recorded as transaction information in separate buyer and seller log files.

The advantage of the system described herein is that the separation of the transaction apparatus 4 into a front-end computer 5 and the transaction processing unit 6 makes it possible to provide adequate security against hackers. Firewall systems may be provided between the front-end computer 5 and the network 1 as well as between the transaction processing unit 6 and the front-end computer 5. This renders it impossible, or at least very difficult, to gain access to the fixed data files 7 and 8 from the network 1. In addition, some of the payment requests will be disapproved by the front-end computer 5, so that the transaction processing unit 6 only needs to process payment requests that are more likely to lead to a successful transaction. The processing of transactions in the front-end computer 5 takes place in the main memory, as a result of which the processing speed is high and manipulation of the processing process by unauthorized persons over the network 1 will be very difficult.

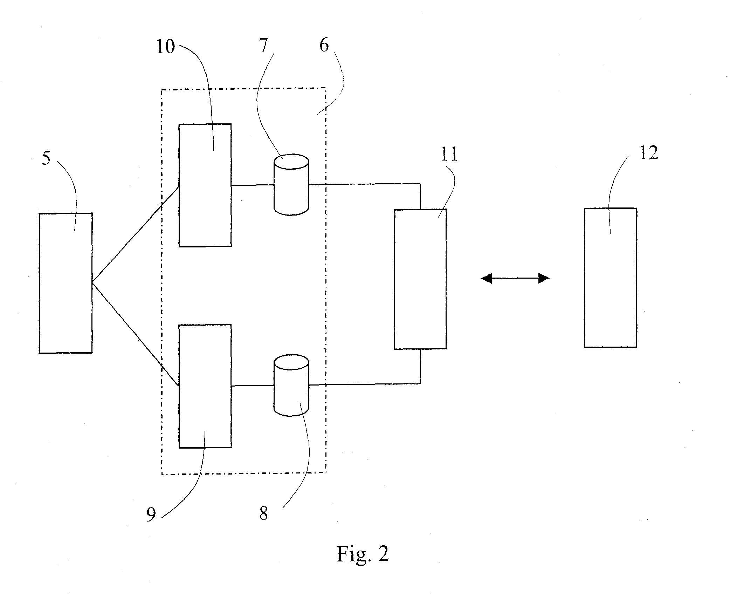

Fig. 2 shows a preferred embodiment of the transaction apparatus 4, the configuration and manner of processing transactions of which will be described in more detail hereinafter. In this preferred embodiment, the transaction processing unit 6 comprises at least one separate buyer transaction computer 9, which comprises the buyers data file 8, and at least one separate seller transaction computer 10, which comprises the sellers data file 7. Only the buyer transaction computer 9 communicates with the front-end computer 5. When a transaction is to be processed, the front end computer 5 retrieves buyer data from the buyers data file 8 in the buyer transaction computer 9. If the front-end computer 5 approves the payment request, the second verification of the payment request takes place in the buyer transaction computer 9. If the payment request is also approved by the buyer transaction computer 9, the payment request is passed on to the seller transaction computer 10, which verifies the payment request on the basis of the seller data in the sellers data file 7. Upon approval of the payment request, the seller transaction computer 10 delivers a payment ticket to the front-end computer 5 via the buyer transaction computer 9.

The buyer transaction computer 9 keeps the buyer log file and the seller transaction computer 10 keeps the seller log file, in which the transaction information is recorded. For example, the fact that a transaction between the identified buyer and seller has been effected, wherein the buyer must pay a specific amount to the seller and the seller must receive said amount, may be recorded as transaction information in said buyer and seller log files. Preferably, however, transaction events that occur during the processing of a transaction in the transaction apparatus 4 are recorded in the buyer log file and the seller log file. This means that when the front-end computer 5 delivers a user identification and a password to the buyer transaction computer 9, this is recorded in the buyer log file as a transaction event, namely as a session start, preferably with a unique session identification. The buyer transaction computer 9 verifies the user identification and the password and registers the outcome, likewise as a transaction event, in the buyer log file with the same unique session identification. If the verification is positive, the buyer transaction computer 9 sends the required buyer data from the buyers data file 8 to the front-end computer 5 and records this transaction event in the buyer log file again. As already indicated above, the front-end computer 5 verifies the payment request on the basis of the buyer data, for example on the basis of the spending limit. It is also possible, of course, to have the front-end computer 5 request an additional buyer acceptation confirmation, for example if the amount to be paid exceeds a specific limit. If approval is obtained, the front-end computer 5 sends the payment request to the buyer transaction computer 9. If approval is not obtained, the front-end computer 5 sends an error message to the buyer computer 3, which will forward this message to the seller computer 2. When the buyer transaction computer 9 receives an approved payment request, this event is recorded in the buyer log file as a transaction event with the unique session identification. The buyer transaction computer 9 verifies the payment request again and, upon approval, forwards the payment requests with the unique session identification to the seller transaction computer 10 and records this in the buyer log file as a transaction event.

The seller transaction computer 10 receives the payment request with the unique session identification and registers this as a transaction event in the seller log file. The seller transaction computer 10 delivers an acknowledgement of receipt having a unique serial number to the buyer transaction computer 9. The seller transaction computer 10 furthermore verifies the payment request and registers the result as a transaction event with the unique session identification in the seller log file. If approval is obtained, the seller transaction computer 10 will deliver a payment ticket, which is provided with a cryptographic signature and also with the same unique serial number as the acknowledgement of receipt. The payment ticket is delivered to the buyer transaction computer 9 and stored in the seller log file as a transaction event. The buyer transaction computer 9 registers the transaction amount with the balance of expenditure in the buyers data file 8 and registers this as a transaction event in the buyer log file. Finally, the buyer transaction computer 9 sends the payment ticket to the front-end computer 5 and likewise registers this in the buyer log file, whilst at the same time a session end is registered. The front-end computer 5 sends the payment ticket to the buyer computer 3, which in turn forwards the payment ticket to the seller computer 2. The seller computer 2 verifies the signature of the payment ticket and, upon approval, the requested product is delivered to the buyer computer 3.

Alternatively it is possible not to terminate a session with the sending of the payment ticket. The user of the buyer computer 3 may indicate that he wishes to carry out more than one transaction during the current session. After receipt of the payment ticket and the requested product, a next product may be requested, using the buyer computer 3, from the same seller computer 2 or from another seller computer 2, as a result of which a new payment request is sent to the front-end computer 5 via the buyer computer 3. The processing of said new transaction takes place in the same manner, with only the step of retrieving a user identification being skipped. This means that a session may comprise several transactions.

The buyer log file and the seller log file are periodically delivered to a back-end computer 11. Said delivery of the log files may take place once a day, for example, once every hour or even once every 15 minutes, or at any other desired interval. The more frequently the log files are delivered to the back-end computer 11, the safer the system described herein will be. Once the log files have been delivered to the back-end computer, unauthorized persons cannot possibly gain access thereto via the network 1.

In the back-end computer 11, various verifications of the received log files are carried out. As a first verification, the log files may be verified for technical consistency, i.e. a verification is carried out as regards the question whether all the transaction events required for a transaction have been recorded in both log files, whether all transaction events comprise the required data fields, whether the sequence of the transaction events is correct, etc. Since all transaction events are recorded in the buyer log file as well as in the seller log file, the back-end computer is capable of verifying the entire course of events concerning the transaction processing process. This means a high degree of security, since a hacker would have to manipulate both the buyer log file and the seller log file in the right manner in order to realise a valid transaction. If an irregularity should be detected in the series of transaction events in either one of the two log files or upon comparison of the two log files with each other, this will automatically lead to the transactions in question being disapproved as being invalid. This means that payment by the buyer to the seller will not be effected. This disapproval of the transaction does not affect the payment ticket that has already been delivered. Only the actual making of a payment is blocked.

In the back-end computer 11 a so-called split/merge operation, in which the transaction events are sorted and the transaction events of every transaction are grouped on the basis of the unique session identification, is carried out at regular intervals, for example once a day. In this manner a list of transactions per buyer and a list of transactions per seller are obtained. Verifications are carried out on both lists so as to check whether all the transaction events are present. If events are missing, for example due to the connection being broken during the session, the transactions in question will not be approved. Events that indicate an intrusion of the system can likewise be detected and will also lead to the transactions in question being disapproved. Once the final verification has been carried out, the buyer list goes to the buyer and the seller list goes to the seller. After a predetermined period, for example the statutory period for submitting complaints, any transactions that are to be declared invalid for other reasons are processed and second buyer and seller lists follow. Another reason may e.g. be the fact that the buyer complains, because delivery has not taken place. The definitive buyer and seller lists are sent to the buyer and the seller, respectively, and to a payment processing department 12 (schematically indicated in Fig. 2), where the lists are processed into payments from the buyer to the seller and the amounts in question are debited from the buyer's account and credited to the seller's account, respectively, with a bank or the like.

From the foregoing it will be apparent that the use of separate units in the system makes it possible to realise a high degree of security. The use of separate buyer and seller transaction computers 9, 10 in the processing unit 6 renders it virtually impossible for hackers to gain control over the entire transaction apparatus 4. Additional security is achieved by the registration of various successive transaction events in the buyer log file 8 and the seller log file 7, respectively. Manipulation of the transaction events registered in said log files is excluded once the log files have been transferred to the back-end computer 11. In said back-end computer 11, the correctness of the transaction events in the two log files is verified, which may lead to transactions being disapproved yet even if a payment ticket was delivered to the buyer computer 3 by the transaction apparatus 4. This means that any malfunctions or intrusions of the system that lead to an incorrect recording of transaction events do not disable the system completely, so that the transaction apparatus 4 can deliver payment tickets for buyers and sellers; in cases in which an attempt at hacking has been made, however, the processing of the payment tickets into actual payments is prevented by the back-end computer 11.

In the system described herein, the buyer transaction computer 9 is preferably arranged such that only one session per buyer may be open at the same time. This prevents a hacker from starting several sessions at a time for one buyer. The recording of a unique session identification for every session makes it possible to transfer the buyer and seller log files to the back-end computer at any desired point in time, even if sessions are still open. The back-end computer will determine during the split/merge operation that no session end has been registered yet of those sessions that have not been completed yet.

As already noted above, a unique serial number is allocated to every payment ticket for every seller, so that the seller computer 2 will receive a series of payment tickets having unique numbers. This enables the seller to show the organisation that operates the transaction apparatus 4 which payment tickets have been or should have been received. Every payment request that is delivered to the buyer computer 3 by the seller computer 2, if the user of the buyer computer 3 makes it known on the website of the seller computer 2 that the user wishes to purchase a product, may have a static composition comprising a cryptographic signature of the seller computer 2. This means that the seller computer 2 does not need to generate a cryptographic signature for every payment request, but that the total payment request may be permanently stored in the seller computer 2. The payment request may be made semi-static or semi-dynamic by adding a serial number or the like to the permanent part comprising the cryptographic signature. If desired, it is also possible to use a dynamic payment request, which is generated with a cryptographic signature with every transaction.

The transaction apparatus 4 is configured such that when the same buyer computer 3 sends the same payment request to the transaction apparatus anew, the transaction apparatus will recognise this as a technical error. In that case the seller transaction computer 10 will deliver the same payment ticket that was previously delivered in response to the same payment request to the front-end computer 5 and by the front-end computer 5 via the buyer computer 3 to the seller computer 2. This prevents double payments being made for one and the same product in the case of technical trouble, for example a broken connection during the processing of the transaction. To that end, the transaction apparatus 4 may compare said payment request with the most recently received payment request upon receipt of a payment request received from a particular buyer computer 3, and deliver the previously sent payment ticket once again if the buyer data and the payment request correspond. It is not necessary in this connection for the payment requests to be completely identical. The similarity may for example be sufficient if it appears from the comparison that the payment requests originate from the same buyer and the same seller and relate to the same product.

Although the system described herein comprises only one transaction apparatus 4 comprising one front-end computer 5, one buyer transaction computer 9 and one seller transaction computer 10, the system may comprise more than one transaction apparatus and the transaction apparatus may comprise more than one front-end computer, more than one buyer transaction computer and more than one seller transaction computer.

If a front-end computer 5 cooperates with several buyer transaction computers 9, the front-end computer 5 can determine by means of the user identification with which buyer transaction computer 9 it must cooperate for processing the transaction. If more than one seller transaction computer 10 is used, every one of said seller transaction computers 10 will generally contain all the information on all the sellers. In that case the various seller transaction computers 10 are used for reducing the load on every computer, for example, or as back-up computers. It is also possible, if desired, to distribute the sellers over the various seller transaction computers 10. The front-end computer 5 or the buyer transaction computer 9 being involved may for example derive from a datum in the payment request which one of the seller transaction computers 10 contains the relevant seller data.

If a system comprising several transaction apparatuses 4 is used, transactions may occur in which sellers and buyers of different transaction apparatuses 4 are involved. For example, if the seller data is contained in a seller computer 10 of another transaction apparatus 4, the buyer transaction computer 9 of the first transaction apparatus 4 will effect a connection with the seller transaction computer 10 of the other transaction apparatus 4, with a virtual seller log file as well as the usual seller log file being kept in, respectively, the buyer transaction computer 9 and the seller transaction computer 10 of the other transaction apparatus 4. This enables a comparison between the two seller log files by the organisations that operate the various transaction apparatuses. This comparison can be made by the back-end computers 11 of the transaction apparatuses 4 involved. For the rest, the processing of the transactions takes place in the manner as described above. It is also possible, of course, to have the seller transaction computer 10 of the one transaction apparatus 4 keep a virtual buyer log file for comparison with the buyer log file in the other transaction apparatus 4.

It is noted that various parts of the systems described herein are suitable for use in other systems. For example, the registration of transaction data or transaction events in separate buyer and seller log files may also be used in systems that do not comprise a separate front-end computer and a separate transaction processing unit. Thus, the separation between the transaction processing unit and the back-end computer that carries out a next verification of recorded transaction data may be used in any system in which separate log files are kept. It is furthermore noted that in those cases in which a cryptographic signature is added in the embodiments described herein, also other forms of authentication of the payment request may be used. Likewise it obtains that in those cases in which authentication takes place by means of a user name and a password in the embodiments described herein, also other forms of authentication of the buyer are possible. Such authentication methods are known per se and need not be discussed in more detail herein.

Although the embodiment described herein makes use of the Internet as the network, the system described herein may also use other communication networks or a combination of various communication networks, such as the mobile telephone network and/or the landline network. It will be apparent that within the framework of the present application and the claims the terms web server software for the seller computer and web browser for the buyer computer are understood to mean software that supports the functions described herein of seller computer and buyer computer, respectively, which are connected to the network in question. In this connection the term buyer computer comprises any station that is capable of communicating with the network in question, such as an i-mode mobile telephone, a PDA in telephone mode or the like. If a mobile telephone is used, the procedure for identifying the user may be skipped if the provider that operates the mobile communication network guarantees that the correct sub-scriber's number will be attached to messages that are passed on from the mobile terminal. In that case the transaction apparatus can retrieve the buyer data from the buyers data file 8 on the basis of the subscriber's number.

In the embodiments as described above, the processing of the transaction was started by the transaction apparatus 4 as a result of the user of a buyer computer 3 responding to an offer on the web site of the seller computer 2. The transaction apparatus 4 described herein may also be used in a system in which the offer is made by a seller via a channel other than the Internet, with the same security advantage as regards the processing of transactions being achieved. For example, offers may be made via usual channels, such as an advertisement in a newspaper, on a billboard or in the form of a radio or television commercial or the like. In this case the transaction is started as a result of a user of a buyer terminal, e.g. a mobile telephone, sending an SMS message containing a code for the desired product to an access number after having seen an advertisement, via which access number the SMS message is delivered to the transaction apparatus 4. The transaction apparatus 4 retrieves the associated payment request from the seller computer 2 on the basis of the code in the SMS message. Said payment request actually constitutes an offer containing a payment proposal in that case. The transaction apparatus 4 may additionally request a payment confirmation from the buyer terminal by means of an SMS message. After the buyer has provided such a payment confirmation, or has omitted to do so, the processing of the transaction, with verifications being carried out on the basis of buyer data and seller data, will take place in the manner described above. Once the verification operations have been completed successfully, the transaction apparatus sends the payment ticket to the seller computer 2. After receipt of the payment ticket, the seller computer 2 delivers the requested product to the buyer terminal, if the product being purchased is intended for use in the buyer terminal. The delivery can take place either directly from the seller computer 2 to the buyer terminal or via the transaction apparatus 4. The delivery may also concern a physical product, of course, for example in the form of a taxi ride or a product from a vending machine where the user of the buyer terminal is present.

According to another possibility, a user of a buyer terminal, such as a mobile telephone, is present at a seller terminal of the seller and communicates with the transaction apparatus via said seller terminal. The seller terminal can communicate with the user via a display in that case and show an SMS message that is to be sent to the transaction apparatus for purchasing the desired product. Once the SMS message has been sent, the procedure passes off as described above. Alternatively, the user may send a payment request to the transaction apparatus via the seller terminal, including his user identification. The transaction apparatus may send an SMS message containing an OK code to the buyer terminal, which OK code is returned by the user again, for example via the seller terminal. Also in this case the verifications of the buyer and seller data in the transaction apparatus take place in the manner as described before.

It is noted that in those cases in which an SMS message is used, also EMS, MMS and iMAIL messages may be used, of course. The designation SMS message as used in the claims also includes the aforesaid other types of messages, therefore. The various communication possibilities via the Internet and mobile telecommunication networks as described herein may be used in any mixed form thereof that may be desired.

The products that can be delivered in this way include so-called ring tones, MP3 files or purchase tickets that may be used as admission tickets, for example to a cinema, a museum or the like. Also parking fees and the like may be paid in this manner.

In the transaction apparatus as described, payments are at all times effected via the procedure as described. In another embodiment it is also possible, however, to incorporate a comparison with a maximum amount for a transaction in the procedure, in which the transaction apparatus passes the handling of the transaction on to a banking system or other payment system if the amount to be paid exceeds a maximum value. Said other payment system communicates with the buyer terminal or the buyer computer in that case in order to effect a payment, the result of which is subsequently communicated to the buyer terminal/computer and to the seller computer by the transaction apparatus. The additional data that the transaction apparatus requires for activating the other payment system(s) is previously provided by the user of the buyer terminal/computer, so that this information will be available at all times in the transaction apparatus. This makes it possible to handle larger payments as well via the systems described herein, and the user does not need to switch to an alternative payment system while carrying out the transaction.

The invention is not limited to the embodiments as described above, which can be varied in various ways within the scope of the invention as defined in the claims.

## Claims

1. A transaction apparatus for processing transactions by means of a communication network, comprising at least one front-end computer and at least one transaction processing unit separate therefrom, which comprises sellers and buyers data files, wherein payment requests including a buyer and a seller identification are received via the communication network and a payment ticket is delivered via the communication network upon approval of a payment request and an error message is delivered via the communication network upon disapproval of a payment request, wherein the front-end computer, upon receipt of a payment request, retrieves buyer data required for the processing of the transaction from the data file of the transaction processing unit, in order to be able to process and register the transactions, and verifies the payment request on the basis of the received buyer data, wherein the payment request, upon approval thereof, is passed on to the transaction processing unit, which verifies the payment request again on the basis of the buyer data in the data file, wherein further processing of the transaction for delivering a payment ticket only takes place if the payment request is approved after both verifications, **characterized in that**
the transaction processing unit comprises at least one separate buyer transaction computer and at least one separate seller transaction computer, the buyer transaction computer comprising a buyers data file and the seller transaction computer comprising a sellers data file, wherein the buyer transaction computer communicates with the front-end computer for providing buyer data and a payment ticket, wherein the payment request, upon approval by the front-end computer, is passed on to the buyer transaction computer, which carries out the verification of the payment request again on the basis of the buyer data in the buyers data file and, upon approval of the payment request, passes the payment request on to the seller transaction computer for verification, wherein the seller transaction computer verifies the payment request on the basis of seller data in the sellers data file, delivering the payment ticket upon approval of the payment request and an error message upon disapproval of the payment request.

2. A transaction apparatus according to claim 1, wherein the seller transaction computer delivers the payment ticket or the error message to the buyer transaction computer, which delivers the payment ticket or the error message to the front-end computer for being forwarded to a seller computer.

3. A transaction apparatus according to claim 1 or 2, wherein the processing of a transaction in the front-end computer is carried out in the main memory.

4. A transaction apparatus according to any one of the preceding claims, wherein the transaction apparatus verifies every payment request and the associated buyer data for correspondence with a previously received payment request comprising the same buyer data, wherein, if the payment request and the buyer data correspond to a sufficient degree, the same payment ticket is sent.

5. A transaction apparatus according to any one of the preceding claims, wherein at least part of a payment request comprises fixed data with an associated signature, wherein a part that varies with each individual transaction may be added to the fixed part.

6. A transaction apparatus according to any one of the preceding claims, wherein separate buyer and seller log files are kept in the transaction processing unit, in which log files the transaction data is recorded, the transaction apparatus being provided with a back-end computer separate from the front-end computer and the transaction processing unit, which back-end computer periodically receives the log files from the transaction processing unit and which is arranged for verifying the seller and buyer log files, wherein the back-end computer only releases transactions it has approved for being processed into payment transactions.

7. A transaction apparatus according to claim 6, wherein a buyer log file is kept in the buyer transaction computer and a seller log file is kept in the seller transaction computer, in each one of which log files transaction events that occur during the processing of a transaction are recorded, wherein the back-end computer verifies all the transaction events in both log files and only releases a transaction for being processed into a payment transaction upon approval of all the associated transaction events.

8. A transaction apparatus according to claim 7, wherein the buyer transaction computer, upon receipt of a first transaction event of a transaction to be processed, generates a unique session identification and records said unique session identification in the buyer log file each time a transaction event occurs, wherein the buyer transaction computer passes the unique session identification and the payment request on to the seller transaction computer, which seller transaction computer likewise records the unique session identification in the seller log file each time a transaction event occurs.

9. A transaction apparatus according to claim 8, wherein the buyer transaction computer registers a session start with the unique session identification in the buyer log file when a first transaction event of a transaction takes place and registers a session end with the unique session identification in the buyer log file when a payment ticket is being sent for said transaction in question or for the last transaction of a series of transactions.

10. A transaction apparatus according to any one of the claims 6-9, wherein the back-end computer processes the transaction data or the transaction events, respectively, into a list of transactions per buyer and/or seller, wherein only the total amount of transactions per buyer/seller is released as a payment transaction for being processed.

11. A transaction apparatus according to any one of the preceding claims, wherein the transaction apparatus numbers payment tickets per seller.

12. A transaction apparatus according to any one of the preceding claims, wherein the transaction apparatus compares the amount to be paid with a threshold value and, when the threshold value is exceeded, passes on the handling of the payment to another payment system, which delivers a payment OK to the transaction apparatus, after which the transaction apparatus delivers the payment ticket to the seller computer.

13. A system for handling transactions via a communication network, comprising a transaction apparatus according to any one of the preceding claims, at least one seller computer and at least one buyer terminal, which are connected to the communication network and which can communicate with the transaction apparatus, wherein the buyer terminal can retrieve a product being offered and wherein the seller terminal, upon such retrieval of a product being offered, can send a payment request to the transaction apparatus for processing and registering the transaction.

14. A system according to claim 13, wherein the transaction apparatus identifies the buyer terminal on the basis of the subscriber's number of the buyer terminal with the communication network, wherein the seller computer sends the requested product to the buyer terminal, which may or may not take place via the transaction apparatus.

15. A system according to claim 13 or 14, wherein the buyer terminal sends an SMS message to the transaction apparatus, wherein the transaction apparatus retrieves the payment request from the seller computer on the basis of the SMS message and, upon approval of the payment request, delivers the payment ticket to the seller computer.

16. A system according to claim 13, 14 or 15, wherein several transaction apparatuses are provided, each comprising at least one front-end computer and at least one associated transaction processing unit, wherein, in the case of a transaction between a buyer computer or seller computer whose data is stored in the data files of a first and a second transaction apparatus, respectively, the transaction processing unit of the first transaction apparatus effects a connection with the buyer or seller transaction computer of the second transaction apparatus, wherein transaction events are recorded in the buyer transaction computer or in the seller transaction computer of both the first and the second transaction apparatus in a virtual buyer or seller log file and in a virtual seller or buyer log file, respectively.

17. A computer program comprising program instructions that make a computer operate as a seller computer in a system according to any one of the preceding claims 13-16 when said program is run on said computer.

18. A computer program comprising program instructions that make a computer operate as a buyer terminal in a system according to any one of the preceding claims 13-16 when said program is run on said computer.
